# EUROPEAN PATENT APPLICATION

(11) **EP 1 108 937 A2**
(43) Date of publication of application: **20.06.2001**
(21) Application number: 00127389.5
(22) Date of filing: 13.12.2000
(51) Int. Cl.: F16L 11/08

(54) **Reinforced flexible hose with a reinforcement consisting of modified rigid material**

(30) Priority: 14.12.1999 IT VI990258
(71) Applicant: FITT S.p.A., 36066 Sandrigo (Vicenza) (IT)
(72) Inventor: Mezzalira, Rinaldo, 36057 Arcugnano VI (IT)
(74) Representative: Vannini, Mario

(57) **Abstract**

A reinforced flexible hose (1), in particular for sucking and conveying liquids and gaseous substances, comprises at least one reinforcing element (2) consisting of a first compound of relatively rigid plastic material (C1) completely embedded in a substantially tubular support matrix (3) consisting of a second compound of relatively flexible plastic material (C2) containing plasticizing substances. The first compound (C1) also comprises plasticizing substances in percentage amounts such as to oppose migration of the plasticizing substances from the support matrix (3) to the reinforcing element (2). The first compound (C1) includes a PVC with a relatively high viscosity index (K), for example of between 50 and 80 and preferably of between 55 and 70. The percentage of plasticizing products contained in said first compound of relatively rigid plastic material (C1) may be between 1 % and 40% and is preferably between 5% and 20%. The second compound of relatively flexible plastic material (C2) includes a PVC with a viscosity index less than that of the PVC used in the first compound of plastic material (C1) with the addition of significant percentages of plasticizing substances.

## Description

### Technical Field

The present invention relates to a flexible hose made of a reinforced plastic material, particularly suitable for sucking and conveying liquids and gaseous substances as well as powders and solid materials in suspended form.

In particular, the invention relates to a reinforced hose with an internal reinforcement element generally in the form of a helical spiral which, owing to this particular configuration, is commonly described as being spiralled.

### Background art

Reinforced flexible hoses essentially comprising an internal reinforcing element made of a modified relatively rigid material, generally in spiral form, and embedded in a base layer or main tubular wall of relatively flexible material are known.

The basic materials used for the various parts of the hose are of the type with a high quality/price ratio. For example, the spiral may consist of a relatively rigid PVC, while the tubular layer may be formed by a relatively flexible PVC.

The compound generally used for extrusion of the rigid PVC spiral essentially consists of a PVC resin with a viscosity index K variable between 55 to 70 and a stabilizer, with the optional addition of a certain quantity of inert filler material, for example calcium carbonate.

Other additives, such as anti-impact processing agents, lubricants as well as colouring agents may also be added to this formulation.

The compound generally used for extrusion of the flexible tubular layer essentially consists of a PVC resin containing a significant quantity of a plasticizer and a stabilizer, with the optional addition of a certain quantity of inert filler material, for example calcium carbonate. Other processing agents, such as lubricants, stabilizers as well as colouring agents may also be added to this formulation.

The presence of significant quantities of plasticizing substances in the flexible compound has the function of increasing the flexibility properties of the basic plastic material.

A problem of these known materials resides in the tendency of the plasticizing substances introduced into the flexible PVC to migrate to the rigid PVC, which tendency becomes particularly acute and critical when there is a migration of plasticizer in relatively low percentages, such as to cause weakening of the rigid PVC and the risk of cracking and breakage of the reinforcement spiral. This may give rise, in particular in the case where the hose is subject to stresses and compressive forces even of a limited nature, to local weaknesses in the hose which inevitably lead to a loss of sealing capacity and hence loss of pressure or vacuum inside the hose. This phenomena is referred to by the technical term "cracking".

In an attempt to solve the problem of cracking, in the past certain solutions have been proposed, such as, for example, the use, in the flexible part, of plasticizers which are not subject to the phenomenon of migration.

A further solution consists in replacing the flexible plastic material with other materials not containing plasticizers, such as PUR (polyurethane), or other plastic materials which are not subject to weakening phenomena typical of rigid PVC.

Patent application No. VI99A000142, in the name of the same Applicant, proposed a solution to the abovementioned technical problem, consisting in covering the rigid PVC spiral with a film of suitable material so as to prevent penetration of the plasticizer from the flexible part into the rigid part.

However, this solution has proved to be disadvantageous or very unfavourable from an economic point of view and therefore unsuitable for use in the production of hoses for the bottom end of the market.

### Presentation of the invention

A first main object of the present invention is to provide a reinforced flexible hose with a new type of rigid spiralled reinforcement which has a high resistance to the phenomenon of cracking and which thus has a notable durability over time even when subject to permanent mechanical stresses such as expansion, knocks and compression.

Another particular object is to devise a hose of the abovementioned type which has a relatively simple structure and is easy to manufacture and ensures a reduction in costs while maintaining the same structural characteristics.

These objects are achieved by means of a reinforced flexible hose, in particular for sucking and conveying liquids and gaseous substances, comprising, in accordance with claim 1, at least one reinforcing element consisting of a first compound of relatively rigid plastic material completely embedded in a substantially tubular support matrix consisting of a second compound of relatively flexible plastic material containing plasticizing substances, characterized in that said first compound of plastic material from which said reinforcing element is formed also comprises plasticizing substances in percentage amounts such as to oppose migration of the plasticizing substances from said support matrix to said reinforcing element.

According to a second aspect, the invention envisages a method for the production of the abovementioned reinforced flexible hose which, in accordance with claim 9, comprises the following steps:
- preparation of a first compound of relatively rigid plastic material intended to form said relatively rigid reinforcing element and a second compound of plastic material which contains PVC with the addition of suitable plasticizing substances and is intended to form said relatively flexible support matrix;
- heating of said first and said second compound until they reach a fluid or paste-like state;
- co-extrusion of said first and said second compound in the paste-like state inside a co-extrusion nozzle so as to form a strip of suitable cross-section and undefined length;
- continuous deposition of said strip in the plastic state onto a substantially rectilinear rotating spindle along a spiral shaped path with spirals in mutual contact so as to define the reinforcing element embedded in said tubular matrix;
- keeping said strip on the spindle for the time required to produce molecular adhesion of the co-extruded materials for formation of the reinforced wall of the hose;
- cooling of the strip down to room temperature so as to form the unified and finished reinforced hose;
characterized in that said first compound used for extrusion of the relatively rigid reinforcing element contains a PVC with the addition of plasticizing substances in an amount such as to oppose migration of the plasticizing substances from said support matrix to said reinforcing element and limit the weakening phenomena affecting the finished product.

### Short description of the drawings

Further characteristic features and advantages of the invention will appear more clearly in connection with the following description of a preferred, but not exclusive embodiment of a reinforced flexible hose illustrated by way of a non-limiting example with the aid of the accompanying drawings, in which:
Fig. 1 shows a partially sectioned, perspective view of a segment of a reinforced flexible hose according to the invention;
Fig. 2 shows a cross-section through a detail of the wall of the hose according to Fig. 1;

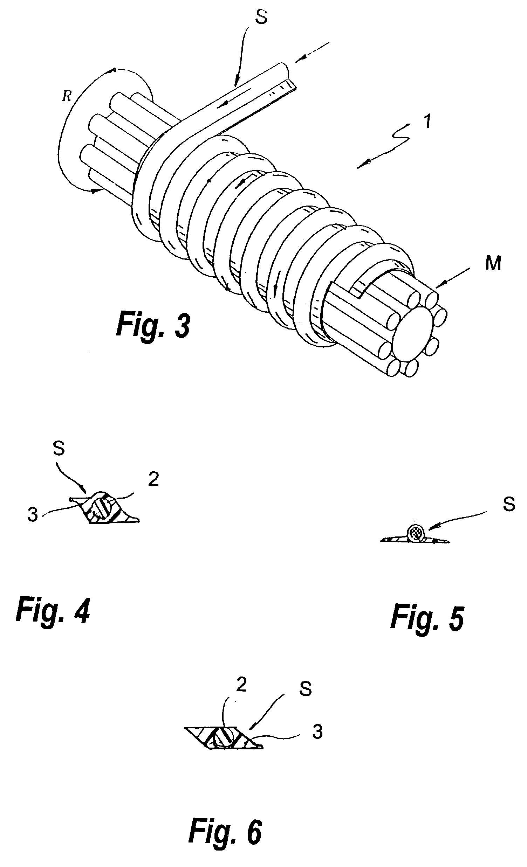

Fig. 3 shows a perspective view of a step during manufacture of the hose according to Fig. 1;
Figs. 4, 5 and 6 show cross-sections through different forms of the strip of co-extruded plastic material forming the hose according to the invention.

### Detailed description of a preferred embodiment

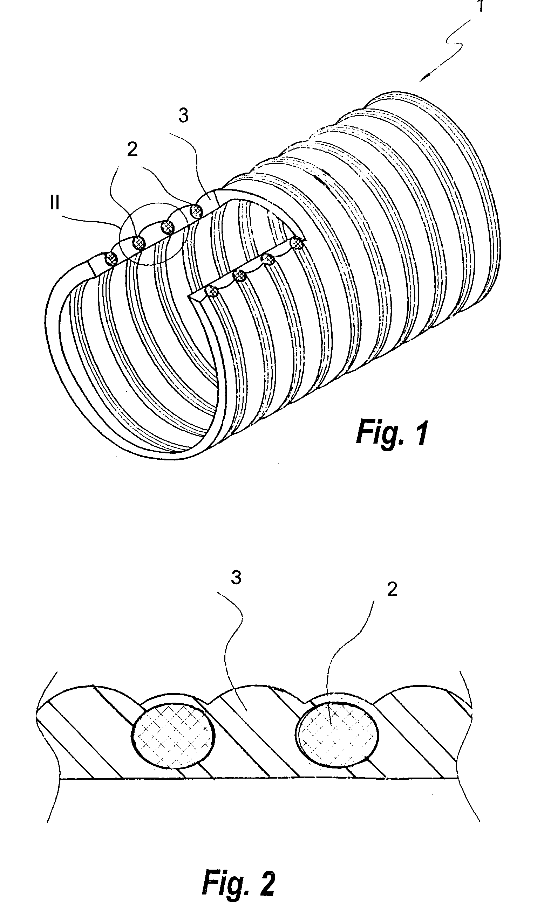

With reference to Figures 1 and 2, these figures show a flexible hose, generally indicated with the reference number 1, comprising a reinforcing element 2 which consists of a first compound C1 of relatively rigid plastic material around which a support layer or matrix 3 consisting of a second compound C2 of relatively flexible plastic material is wound, so as to have a certain flexibility which may be more or less accentuated depending on the requirements of the end product.

Preferably, the reinforcing element 2 is substantially in the form of a wire wound in the manner of a helical spiral, while the support matrix 3 is co-extruded between the spirals of the reinforcing element 2 so as to form the tubular wall of the hose 1.

The flexible hose 1 thus formed will have anti-cracking characteristics designed to increase considerably the resistance and duration compared to the hoses of the prior art.

The strip S, while it is still in the paste-like state, is wound spirally onto a spindle M rotating in the direction of the arrow R and with the spirals in mutual contact. The strip S is kept on the spindle M for the time required to allow molecular adhesion of the material of the film 4 both to the material of the reinforcing element 2 and to that of the layer 3. During the process the external wall of the hose 1 is thus formed and then allowed to cool to room temperature.

The second compound C2 intended to form the support matrix 3 comprises a PVC with a relatively low viscosity index K, for example less than 50, with the addition of a significant quantity of plasticizing substances.

These plasticizing substances may be chosen from among phthalates, chloroparaffins, epoxidated soya oil, polyesters, adipates, trimellitates, benzoic acid derivatives, oils derived from fatty acids, phosphoric or citric acid esters, epoxy resins, dicarboxylic aliphatic acid esters, phenol alkyl sulphonic acid esters, rubbers, individually or in combination with each other.

Some of the products listed above may also be used to obtain other effects in the product (stabilization, resistance to light, etc.); in any case, with the amounts indicated, the anti-cracking effect in the extruded product is also obtained.

According to the invention, the first compound of plastic material C1 from which the reinforcing element 2 is made also comprises plasticizing substances in percentage amounts such as to oppose migration of the plasticizing substances from said support matrix to said reinforcing element.

In particular, this first compound C1 comprises a PVC with a relatively high viscosity index, for example of between 50 and 80 and preferably between 55 and 70.

In order to prevent weakening of the reinforcing spiral, the PVC contained in the first compound C1 is suitably added in a percentage amount of up to 40%. This percentage amount is preferably between 5% and 20%.

Advantageously the percentage of plasticizing substances contained in the first compound C1 is determined so as to provide the latter with a minimum hardness of 90 Shore A.

The method for production of a reinforced flexible hose 1 comprises the following steps:
- preparation and heating of the first compound C1 and the second compound C2 until they reach a fluid or paste-like state;
- co-extrusion of the two compounds in the paste-like state inside a co-extrusion nozzle so as to form a strip S of suitable cross-section and undefined length;
- continuous deposition of the strip S in the plastic state onto the spindle M along a spiral shaped path with spirals in mutual contact so as to define the reinforcing element 2 embedded in the tubular matrix 3;
- keeping the strip S on the spindle M for the time required to produce molecular adhesion of the co-extruded materials and form the reinforced wall of the hose;
- cooling of the strip S down to room temperature so as to form the unified and finished reinforced hose.

From the above it is obvious that the hose according to the invention achieves the predefined objects and in particular attention is drawn to the absence of weakening phenomena in the hose thus formed, the constructional simplicity thereof and its relative low cost.

## Claims

1. Reinforced flexible hose (1), in particular for sucking and conveying liquids and gaseous substances, comprising at least one reinforcing element (2) consisting of a first compound of relatively rigid plastic material (C1) completely embedded in a substantially tubular support matrix (3) consisting of a second compound of relatively flexible plastic material (C2) containing plasticizing substances, characterized in that said first compound of plastic material (C1) from which said reinforcing element (2) is formed also comprises plasticizing substances in percentage amounts such as to oppose migration of the plasticizing substances from said support matrix (3) to said reinforcing element (2).

2. Reinforced flexible hose according to Claim 1, characterized in that said first compound of relatively rigid plastic material (C1) includes a PVC with a relatively high viscosity index (K).

3. Reinforced flexible hose according to Claim 2, characterized in that the viscosity index (K) of said PVC of said first compound of plastic material (C1) may be between 50 and 80 and is preferably between 55 and 70.

4. Reinforced flexible hose according to Claim 1, characterized in that the percentage of plasticizing products contained in said first compound of relatively rigid plastic material (C1) may be between 1 % and 40% and is preferably between 5% and 20%.

5. Reinforced flexible hose according to Claim 1, characterized in that said second compound of relatively flexible plastic material (C2) forming said tubular support matrix (3) includes a PVC with a viscosity index less than that of the PVC used in said first compound of plastic material (C1) with the addition of significant percentages of plasticizing substances.

6. Reinforced flexible hose according to Claim 1, characterized in that said plasticizing substances are chosen from among phthalates, chloroparaffins, epoxidated soya oil, polyesters, adipates, trimellitates, benzoic acid derivatives, oils derived from fatty acids, phosphoric or citric acid esters, epoxy resins, dicarboxylic aliphatic acid esters, phenol alkyl sulphonic acid esters, rubbers, individually or in combination with each other.

7. Reinforced flexible hose according to Claim 1, characterized in that the percentage of plasticizing substances contained in said first compound of plastic material is determined so as to provide the latter with a minimum hardness of 90 Shore A.

8. Reinforced flexible hose according to Claim 1, characterized in that said at least one reinforcing element (2) is substantially in the form of a wire and is wound in a substantially helical spiral, with a minimum diameter of the spiral greater than the internal diameter of said support wall (3).

9. Method for the production of a reinforced flexible hose, according to one or more of the preceding claims, comprising the following steps:
- preparation of a first compound of relatively rigid plastic material (C1) intended to form said relatively rigid reinforcing element (2) and a second compound of plastic material (C2) containing PVC with the addition of suitable plasticizing substances and intended to form said relatively flexible support matrix (3);
- heating of said first compound (C1) and said second compound (C2) until they reach a fluid or paste-like state;
- co-extrusion of said first compound (C1) and said second compound (C2) in the paste-like state inside a co-extrusion nozzle so as to form a strip of suitable cross-section and undefined length;
- continuous deposition of said strip in the plastic state onto a substantially rectilinear rotating spindle along a spiral shaped path with spirals in mutual contact so as to define the reinforcing element (2) embedded in said tubular matrix (3);
- keeping said strip on the spindle for the time required to produce molecular adhesion of the co-extruded materials and formation of the reinforced wall of the hose;
- cooling of the strip down to room temperature so as to form the unified and finished reinforced hose;
characterized in that said first compound (C1) used for extrusion of the relatively rigid reinforcing element (2) contains a PVC with the addition of plasticizing substances in an amount such as to oppose migration of the plasticizing substances from said support matrix (3) to said reinforcing element (2) and limit the weakening phenomena affecting the finished product.
